# EUROPEAN PATENT APPLICATION

(11) **EP 4 145 116 A1**
(43) Date of publication of application: **08.03.2023**
(21) Application number: 22194392.1
(22) Date of filing: 07.09.2022
(51) Int. Cl.: G01N 23/04, G01N 23/18

(54) **PROTECTIVE MEMBER AND ARTICLE PROCESSING DEVICE**

(30) Priority: 07.09.2021 JP 2021145418
(71) Applicant: ISHIDA CO., Ltd., Kyoto-shi, Kyoto 606-8392 (JP)
(72) Inventor: TSUGAWA, Tono, Kyoto-shi, Kyoto, 606-8392 (JP); KOMORI, Haruhiko, Ritto-shi, Shiga, 520-3026 (JP); KONDO, Shingo, Ritto-shi, Shiga, 520-3026 (JP)
(74) Representative: Global IP Europe Patentanwaltskanzlei

(57) **Abstract**

An X-ray shielding curtain (20) includes a main body (22) having a pair of main surfaces (22a and 22b) facing each other, and a plurality of protruding parts (24) provided on at least one of the pair of main surfaces (22a and 22b) of the main body (22) and protruding from the main surface (22a or 22b), wherein each of the plurality of protruding parts (24) has an opening (24d) that communicates with a corresponding hole formed within the main body (22a and 22b).

## Description

### TECHNICAL FIELD

The present invention relates to a protective member and an article processing device.

### BACKGROUND

For example, a device described in Patent Document 1 is known as a conventional article processing device. An X-ray inspection device as an article processing device described in Patent Document 1 (Japanese Unexamined Patent Publication No. 2010-175363) includes a transport means (a transport part) that transports an object to be inspected (an article), and an X-ray leakage prevention means (a protective member) disposed on the transport upstream side and the transport downstream side of the transport means.

### SUMMARY

The article is loaded into a processing part from a loading part by being brought into contact with the protective member in a state of the article is being transported by the transport part, and comes into contact with the protective member and is unloaded from an unloading part to the outside of the processing part. For example, in a case in which the article has stickiness such as raw meat, when the article comes into contact with the protective member, the article may be caught in close contact with the protective member, and a position of the article in the transport part may be misaligned. When the position of the article is misaligned, a problem may occur in a process after passing through the protective member. In order to prevent the position of the article in the transport part from being misaligned, it is necessary to prevent the article from being caught by the protective member.

One aspect of the present invention is to provide a protective member and an article processing device capable of curbing situations in which an article becomes caught.

A protective member according to one aspect of the present invention is a protective member defined by the appended independent claim. Further advantageous effects can be achieved by preferred embodiments defined in the dependent claims.

The protective member is configured to be provided on a transport path of an article and to come into contact with the article, and includes a main body having a pair of main surfaces facing each other and a plurality of protruding parts provided on at least one of the pair of main surfaces of the main body and protruding from the main surface, wherein each protruding part and the main body form an opening which communicates with one of the holes formed within the main body.

According to a first preferred embodiment of the above-mentioned protective member, each protruding part is configured such that the opening communicates with the corresponding hole via a space formed by the protruding part.

According to a second preferred embodiment of any one of the above-mentioned protective members, each protruding part is configured such that the direction of the opening is oriented toward a direction that intersects with the main surfaces of the main body. Furthermore preferably, the direction of the opening is oriented downward, in use. The direction of the opening is a direction which intersects with, and preferably is perpendicular to, an opening area of the opening.

According to a third preferred embodiment of any one of the above-mentioned protective members, each protruding part extends along the direction intersecting with the main surfaces of the main body and ends with the opening. Thereby, a space is formed to extend along the direction intersecting with the main surfaces of the main body. Furthermore preferably, each protruding part extends downward, in use. Thereby, the space is formed to extend downward, in use.

### BRIEF DESCRIPTION OF THE DRAWINGS

FIG. 1 is a diagram showing a configuration of an X-ray inspection device according to an embodiment.
FIG. 2 is a diagram showing a state in which an X-ray shielding curtain is mounted on a shield box.
FIG. 3 is a side view of the X-ray shielding curtain.
FIG. 4 is a front view showing a part of the X-ray shielding curtain.
FIG. 5A is a view of a protruding part seen from the front, and FIG. 5B is a view of the protruding part seen from below.

### DETAILED DESCRIPTION

Hereinafter, an exemplary embodiment of the present invention will be described in detail with reference to the accompanying drawings. In the description of the drawings, the same or equivalent elements are designated by the same reference numerals, and duplicate description will be omitted.

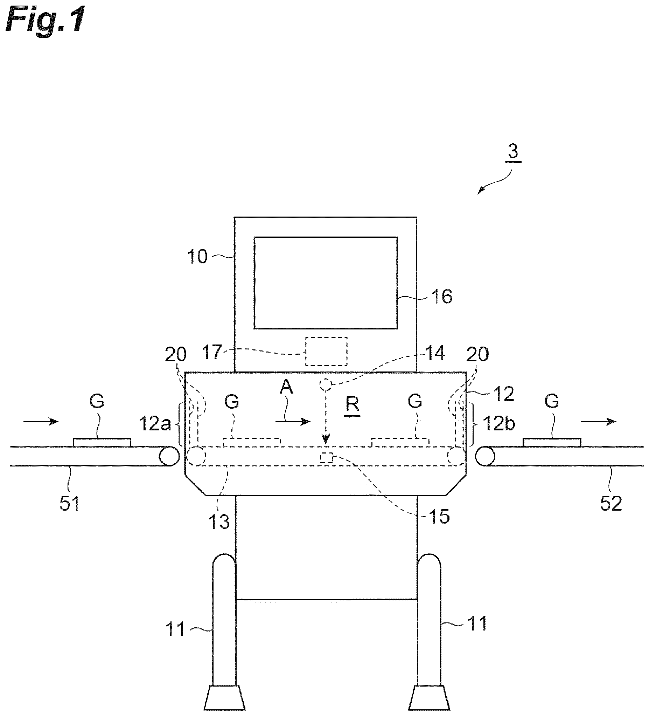

As shown in FIG. 1, an X-ray inspection device (an article processing device) 1 includes a device main body 10, support legs 11, a shield box (a housing) 12, a transport part 13, an X-ray irradiation part (an irradiation part) 14 that irradiates an article G transported by the transport part 13 with X-rays, an X-ray detection part (a detection part) 15 that detects X-rays that have passed through the article G, a display operation part 16 that displays a variety of information and receives an input of various conditions, and a controller 17 that controls each part of the X-ray inspection device 1.

The X-ray inspection device 1 generates an X-ray transmission image of the article G while the article G is transported, and performs an inspection of the article G (for example, a foreign matter inspection, a storage number inspection, a missing article inspection, a crack and chipping inspection, and the like) based on the X-ray transmission image. The article G before the inspection is loaded into the X-ray inspection device 1 by a loading conveyor 51. The article G after the inspection is unloaded from the X-ray inspection device 1 by an unloading conveyor 52.

The shield box 12 prevents a leakage of X-rays (electromagnetic waves) to the outside. An inspection region R in which the article G is inspected by X-rays is provided inside the shield box 12. A loading port (a loading part) 12a and an unloading port (an unloading part) 12b are formed in the shield box 12. An X-ray shielding curtain (a protective member) 20 for preventing the leakage of X-rays is provided on each of the loading port 12a and the unloading port 12b. Details of the X-ray shielding curtain 20 will be described below.

The transport part 13 transports the article G in a transport direction A from the loading port 12a to the unloading port 12b via the inspection region R.

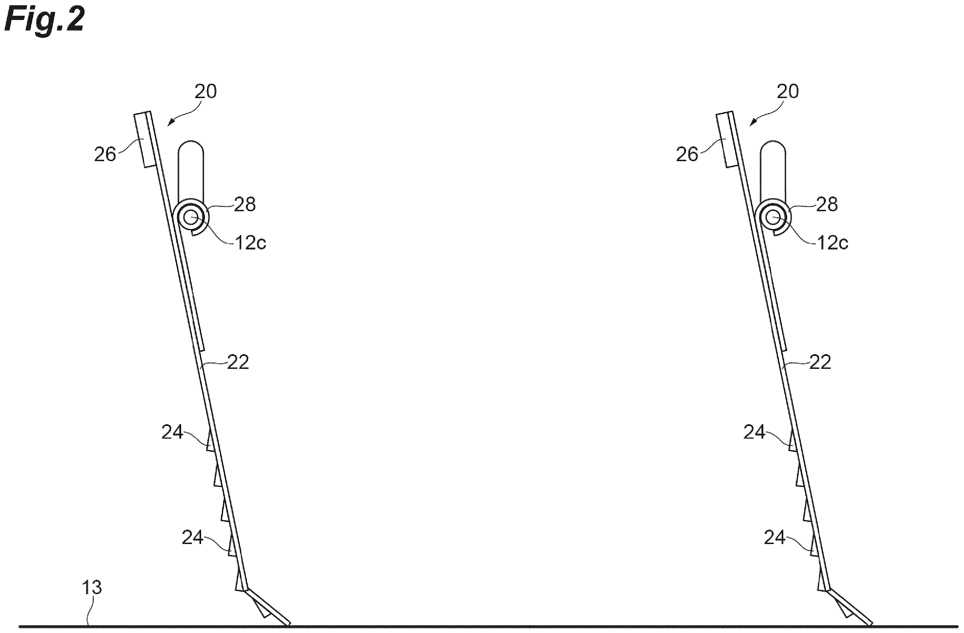

Subsequently, the X-ray shielding curtain 20 will be described in detail. As shown in FIGS. 1 and 2, in the present embodiment, two X-ray shielding curtains 20 are provided in each of the loading port 12a and the unloading port 12b. The X-ray shielding curtains 20 are respectively provided with a predetermined interval therebetween in the transport direction A of the transport part 13. The X-ray shielding curtains 20 are provided on a transport path of the article G. The X-ray shielding curtain 20 is supported by a support part 12c of the shield box 12 and is provided to be swingable around the support part 12c. A plurality of X-ray shielding curtains 20 may be provided in a width direction of the transport part 13 (a depth direction in FIG. 2). A lower end portion of the X-ray shielding curtain 20 is in contact with the transport part 13.

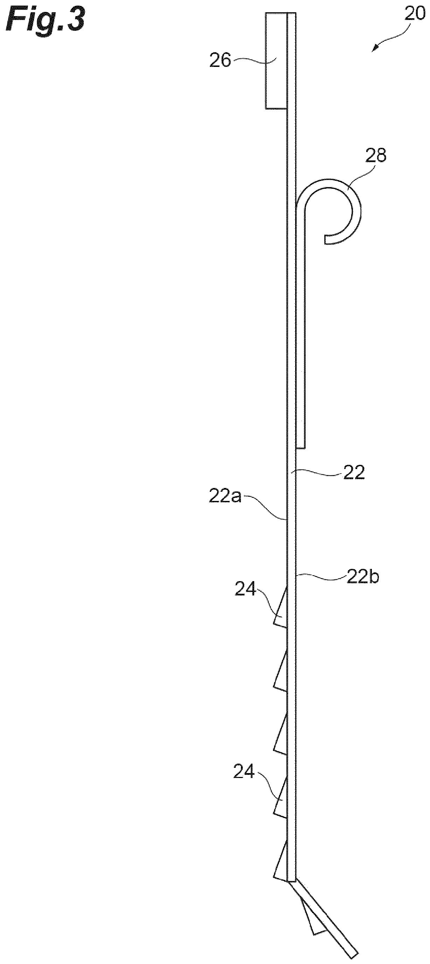

As shown in FIGS. 2 and 3, the X-ray shielding curtain 20 includes a main body 22, a plurality of protruding parts 24, a load part 26, and a locking part 28. In the following, the terms "upper" and "lower" correspond to upward and downward directions in a state of the X-ray shielding curtain 20 shown in FIGS. 2 and 3.

The main body 22 is a plate member. The main body 22 is made of a material that does not transmit X-rays. The main body 22 is made of, for example, tungsten. The main body 22 has a pair of main surfaces 22a and 22b that face each other. In the present embodiment, the main surface 22a is a contact surface with which the article G comes into contact. The main surface 22a and the main surface 22b have water repellency. The water repellency can be imparted by, for example, applying a water repellent treatment (an application of a water repellent agent, an attachment of a water repellent material, or the like) to the main surface 22a and the main surface 22b of the main body 22. A lower end portion of the main body 22 is bent at a predetermined angle.

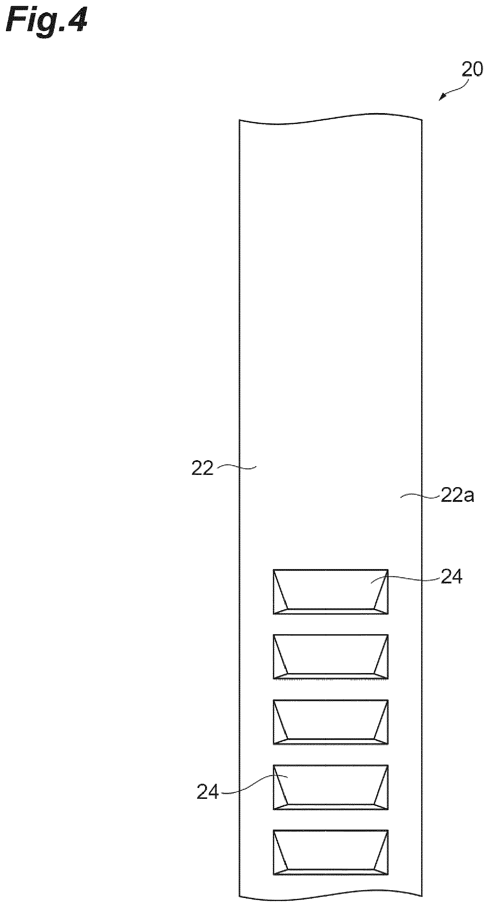

Each of the plurality of protruding parts 24 protrudes from the main surface 22a of the main body 22. In the present embodiment, the plurality of protruding parts 24 are disposed on the lower end side of the main body 22. Specifically, the plurality of protruding parts 24 are disposed on the lower end side of the main body 22 with respect to a center in an overall length of the main body 22 in a longitudinal direction (an extending direction). As shown in FIG. 4, the plurality of protruding parts 24 are disposed at predetermined intervals (equal intervals) in the upward and downward directions of the main body 22.

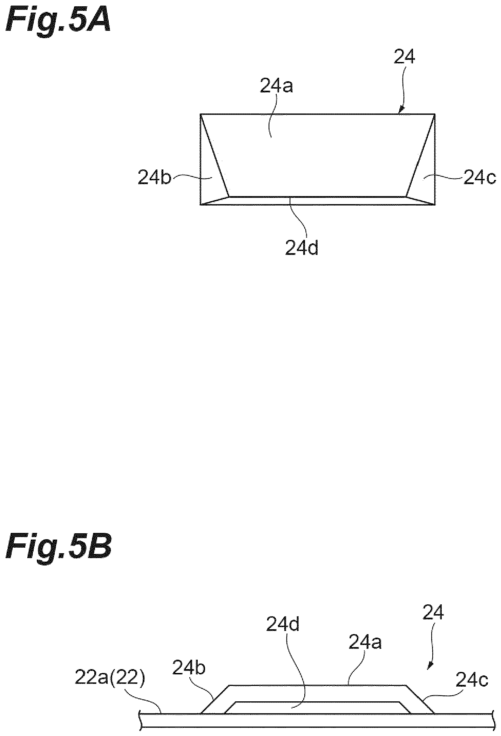

Each of the plurality of protruding parts 24 has the same configuration. Hereinafter, the configuration will be described in detail using one protruding part 24 as an example. As shown in FIGS. 5A and 5B, the protruding part 24 has a first side portion 24a, a second side portion 24b, and a third side portion 24c. The protruding part 24 and the main body 22 define an opening 24d which communicates with one of the holes formed within the main surfaces 22a of the main body 22. The protruding part 24 preferably forms a space each of which ends with the opening 24d. The opening 24d communicates with the corresponding hole via the space.
As shown in FIG. 3, the protruding part 24 has a triangular shape when seen in the width direction of the main body 22 (the depth direction of the drawing in FIG. 3). The protruding part 24 has a tapered shape that tapers from the base end side connected to the main body 22 to the tip end side (toward a direction away from the main body 22).

As shown in FIG. 5A, the first side portion 24a has a trapezoidal shape when seen in a facing direction of the pair of main surfaces 22a and 22b of the main body 22. Specifically, the first side portion 24a has a trapezoidal shape in which the tip end side forms a short side. The first side portion 24a is inclined with respect to the main body 22. An upper end portion of the first side portion 24a is connected to the main body 22, and the first side portion 24a is inclined downward from the upper end portion toward a lower end portion. That is, the first side portion 24a is inclined downward in a direction away from the main body 22. A surface of the first side portion 24a is a flat surface.

The second side portion 24b has a triangular shape when seen in the facing direction of the pair of main surfaces 22a and 22b of the main body 22. The second side portion 24b is located at one end portion of the first side portion 24a in the width direction of the main body 22, and connects the main body 22 to the first side portion 24a. As shown in FIG. 5B, the second side portion 24b is inclined toward the first side portion 24a. A surface of the second side portion 24b is a flat surface. As shown in FIG. 5A, the third side portion 24c has a triangular shape when seen in the facing direction of the pair of main surfaces 22a and 22b of the main body 22. The third side portion 24c is located at the other end portion of the first side portion 24a in the width direction of the main body 22, and connects the main body 22 to the first side portion 24a. As shown in FIG. 5B, the third side portion 24c is inclined toward the first side portion 24a. A surface of the third side portion 24c is a flat surface.

The opening 24d communicates with the corresponding hole formed within the main body 22 via the space formed by the protruding part 24. The hole passes through the pair of main surfaces 22a and 22b of the main body 22 and ends with openings on both main surfaces 22a and 22b, respectively. The opening 24d is defined by the main body 22, the first side portion 24a, the second side portion 24b, and the third side portion 24c. The opening 24d is preferably directed toward a direction that intersects with the facing direction of the pair of main surfaces 22a and 22b. In the present embodiment, the opening 24d is directed downward, in use. Preferably, the protruding part 24 extends along the direction intersecting with the main surfaces 22a, 22b of the main body 22 and ends with the opening 24d. Thereby, the space is formed to extend along the direction intersecting with the main surfaces 22a, 22b of the main body 22. Furthermore preferably, the protruding part 24 extends downward, in use. Thereby, the space is formed to extend downward, in use. Even furthermore preferably, the direction of the opening 24d is oriented downward, in use. The direction of the opening in the present embodiment is a direction which is perpendicular to an opening area of the opening 24d. The opening area of the opening 24d preferably has a trapezoidal shape when viewed along the direction of the opening.

As shown in FIG. 3, the load part 26 is provided at the upper end portion of the main body 22. The load part 26 is disposed on the main surface 22a of the main body 22. The load part 26 is disposed above the main body 22 with respect to the locking part 28. The load part 26 is made of, for example, metal or the like. As shown in FIG. 2, when the X-ray shielding curtain 20 comes into contact with the article G and swings forward (on the left side in FIG. 2) while the X-ray shielding curtain 20 is supported by the support part 12c of the shield box 12, the load part 26 returns the X-ray shielding curtain 20 to a position shown in FIG. 2.

The locking part 28 is locked to the support part 12c of the shield box 12. The locking part 28 is disposed on the main surface 22b of the main body 22. The support part 12c is inserted into the locking part 28.

As described above, the X-ray inspection device 1 according to the present embodiment includes the X-ray shielding curtain 20. The X-ray shielding curtain 20 includes the plurality of protruding parts 24 that are provided on the main surface 22a of the main body 22 and protrude from the main surface 22a. Thus, in the X-ray shielding curtain 20, when the article G comes into contact with the X-ray shielding curtain 20, a space (a void) may be formed between the article G and the X-ray shielding curtain 20 (the main body 22) by the protruding parts 24. The protruding part 24 and the main body 22 form an opening which communicates with one of the holes formed within the main body 22. Therefore, in the X-ray shielding curtain 20, air flows between the article G and the X-ray shielding curtain 20 through the opening 24d. As described above, in the X-ray shielding curtain 20, close contact (attachment) of the article G can be suppressed by a synergistic effect of the protruding parts 24 and the opening 24d. Therefore, the X-ray shielding curtain 20 can suppress a situation in which the article G is caught. As a result, since a position misalignment of the article G in the transport part 13 of the X-ray inspection device 1 can be suppressed, it is possible to avoid occurrence of a problem in a distribution device after the article G passes through the X-ray shielding curtain 20.

In the X-ray inspection device 1 according to the present embodiment, the direction of the opening 24d of the protruding part 24 of the X-ray shielding curtain 20 is oriented in the direction that intersects with the facing direction of the pair of main surfaces 22a and 22b of the main body 22. Preferably, the direction of the opening 24d is oriented downward, in use.

Preferably, each protruding part 24 is configured such that the opening 24d communicates with the corresponding hole via the space formed by the protruding part 24.

Preferably, each protruding part 24 is configured such that the direction of the opening 24d is oriented toward the direction that intersects with the main surfaces 22a, 22b of the main body 22.

Preferably, each protruding part 24 extends along the direction intersecting with the main surfaces 22a, 22b of the main body 22 and ends with the opening 24d. Thereby, a space is formed to extend along the direction intersecting with the main surfaces 22a, 22b of the main body 24. Furthermore preferably, each protruding part 24 extends downward, in use. Thereby, the space is formed to extend downward, in use. Generally, the article G enters the X-ray shielding curtain 20 in the facing direction of the pair of main surfaces 22a and 22b of the main body 22. Therefore, in the X-ray shielding curtain 20, it is possible to avoid blocking of the opening 24d due to the article G by directing the opening 24d downward. Therefore, in the X-ray shielding curtain 20, it is possible to further suppress the situation in which the article G is caught.

In the X-ray inspection device 1 according to the present embodiment, the pair of main surfaces 22a and 22b of the main body 22 of the X-ray shielding curtain 20 have water repellency. With this configuration, it is possible to further suppress the close contact of articles having moisture on the surface (raw meat, dew-condensed bags, or the like).

In the X-ray inspection device 1 according to the present embodiment, in the X-ray shielding curtain 20, the plurality of protruding parts 24 are disposed on the lower end side of the main body 22. With this configuration, it is possible to prevent the X-rays emitted from the X-ray irradiation part 14 from leaking to the outside of the shield box 12 via the protruding parts 24.

As described above, although the embodiment of the present invention have been described, the present invention is not necessarily limited to the above-described embodiment, and various modifications can be made without departing from the gist thereof.

In the above embodiment, the X-ray inspection device 1 has been described as an example of the article processing device. However, the article processing device may be another device. For example, the processing part of the article processing device may be a cutting part or the like that cuts the article. In this case, the protective member is provided on at least one of the loading part through which the article is loaded into the processing part and the unloading part through which the article is unloaded from the processing part on the transport path of the article.

In the above embodiment, in the X-ray shielding curtain 20, a mode in which the lower end portion of the main body 22 is curbed has been described as an example. However, the lower end portion of the main body 22 does not have to be curbed.

In the above embodiment, in the X-ray shielding curtain 20, a mode in which the plurality of protruding parts 24 are provided on the lower end side of the main body 22 has been described as an example. However, the plurality of protruding parts 24 may be provided at positions on the upper end portion side of the main body 22 with respect to the center.

In the above embodiment, the embodiment in which the shape of the protruding part 24 has the configuration shown in FIGS. 3 and 4 has been described as an example. However, the shape of the protruding part is not limited thereto. For example, the surface of the protruding part may be a curved surface.

In the above embodiment, a mode in which the opening 24d of the protruding part 24 of the X-ray shielding curtain 20 is directed downward has been described as an example. However, the opening may be directed in another direction.

In the above embodiment, a mode in which the plurality of X-ray shielding curtains 20 are provided in the width direction of the transport part 13 has been described as an example. However, the X-ray shielding curtains 20 may be one member that extends in the width direction of the transport part 13.

In addition to the above embodiment, the X-ray inspection device 1 (the article processing device) may include a mechanism (for example, a mechanism including a nozzle) that injects a smoothing agent such as water or ethanol onto at least one of the article G and the X-ray shielding curtain 20 on the upstream side of the transport part 13 in the transport direction A with respect to the X-ray shielding curtain 20. That is, a mechanism that injects (sprays) a smoothing agent onto the article G or the X-ray shielding curtain 20 may be provided before the article G comes into contact with the X-ray shielding curtain 20. The mechanism may be provided for the X-ray shielding curtain 20 installed on the loading port 12a side, may be provided for the X-ray shielding curtain 20 installed on the unloading port 12b side, and may be provided for the X-ray shielding curtain 20 installed on each of the loading port 12a side and the unloading port 12b side. With this mechanism, it is possible to further suppress the situation in which the article G is caught by the X-ray shielding curtain 20.

## Claims

1. A protective member configured to be provided on a transport path of an article and to come into contact with the article, comprising:
a main body having a pair of main surfaces facing each other; and
a plurality of protruding parts provided on at least one of the pair of main surfaces of the main body and protruding from the main surface,
wherein each protruding part and the main body form an opening which communicates with one of the holes formed within the main body.

2. The protective member according to claim 1, wherein each of the plurality of protruding parts is provided on one main surface that is configured to come into contact with the article.

3. The protective member according to claim 1 or 2, wherein the opening opens in the protruding part to be directed in a direction that intersects a facing direction of the pair of main surfaces.

4. The protective member according to any one of claims 1 to 3, wherein the plurality of protruding parts are provided on one end side of the main body in an extending direction of the main body.

5. The protective member according to any one of claims 1 to 4, wherein the pair of the main surfaces has water repellency.

6. An article processing device comprising:
a transport part configured to transport an article;
a processing part provided on a transport path of the article transported by the transport part and configured to process the article; and
a protective member provided on at least one of a loading part in which the article is loaded into the processing part and an unloading part in which the article is unloaded from the processing part on the transport path,
wherein the protective member includes a main body having a pair of main surfaces that face each other, and a plurality of protruding parts provided on at least one of the pair of main surfaces of the main body and protruding from the main surface, and
each protruding part and the main body form an opening which communicates to one of the holes formed within the main body.

7. The article processing device according to claim 6, wherein the processing part includes an irradiation part configured to irradiate the article with electromagnetic waves, a detection part configured to detect the electromagnetic waves that have passed through the article, and a housing having a space in which the irradiation part irradiates with the electromagnetic waves, a loading part in which the article is loaded into the space, and a unloading part in which the article is unloaded from the space, and
the protective member is provided on at least one of the loading part and the unloading part of the housing.
